Europäisches Patentamt

European Patent Office

Office européen des brevets

(11) Publication number: **0 164 170**
**B1**

(12) **EUROPEAN PATENT SPECIFICATION**

(45) Date of publication of patent specification: 28.02.90

(21) Application number: 85200822.6

(22) Date of filing: 22.05.85

(51) Int. Cl.⁵: **H 04 J 15/00,** H 04 B 10/00,
G 02 B 6/34

(54) Demultiplexer (multiplexer) for transmission systems in optical fiber.

(30) Priority: 07.06.84 IT 2128584

(43) Date of publication of application:
11.12.85 Bulletin 85/50

(45) Publication of the grant of the patent:
28.02.90 Bulletin 90/09

(84) Designated Contracting States:
DE FR GB NL

(56) References cited:
GB-A-2 014 752
FIJITSU, SCIENTIFIC AND TECHNICAL
JOURNAL, vol. 16, no. 4, December 1980, pages
17-36, Kawasaki, JP; K. MIYAZAKI et al.:
"Optical multiplexer/demultiplexers using thin-
film optical filters"
OPTICAL COMMUNICATION CONFERENCE,
Amsterdam, 17th-19th September 1979, pages
III-1 - III-4, NL; H. ISHIO: "Wavelength-division-
multiplexing transmission technology"

(73) Proprietor: ITALTEL SOCIETA ITALIANA
TELECOMUNICAZIONI s.p.a.
P.le Zavattari, 12
I-20149 Milano (IT)

(72) Inventor: Cavalieri D'Oro, Enzo
Via Lecco, 88
Monza (MI) (IT)

(74) Representative: Coggi, Giorgio
ITALTEL Società Italiana Telecomunicazioni
s.p.a. (Servizio Brevetti) Casella Postale 10
I-20019 Settimo Milanese (MI) (IT)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention essentially concerns a demultiplexer for transmission systems in optical fiber, or in other words a device designed to separate, from one another, $n$ signals (with a wavelength of $\lambda_1$, $\lambda_2$, ..., $\lambda_n$) carried by an input optical fiber, sending them tidily upon $n$ output optical fibers (the first signal, with a wavelength of $\lambda_1$, is sent on the first output optical fiber and so on).

The invention can be used, without requiring any special modifications, as a multiplexer: $n$ signals ($\lambda_1$, ..., $\lambda_n$) carried by as many input optical fibers are collected and directed towards an output optical fiber.

In optical fiber transmission systems, the realization of an efficient and relatively cheap demultiplexer is technically more complex than the realization of a multiplexer: for this reason, the invention will be described with particular reference to its use as a demultiplexer.

Over the last few years, transmission systems on optical fiber have begun to assume an even greater importance in the field of telecommunications systems: the continuous, and considerable progress being made to improve the characteristics of optical fibers and of electro-optical (light source) and optical-electro (light detectors) transducers, is making frequency division (or, if preferred, wavelength division) multiplexing of an ever greater number of signals on the same physical support, more and more the up to date thing.

In such a situation, the problem of how to realize efficient filtering that makes it possible to separate the single signals, from one another, in the receiving part of the system, assumes an increasing importance.

In the traditional transmission systems (on cable or radio frequency carrier waves) the technician has a large number of types of filters available that are able to satisfy practically every requirement: furthermore, an ever wider use is being made of programs that make it possible to optimize (with the help of a computer) the design of the filters in function of the characteristics required, the response curve, dimensions, cost, etc. For optical fiber transmission systems there are still no filters available with characteristics that may be compared to those of the traditional filters. In particular, the optical filters at present available present a noticeable reflection, even in the pass-band, and therefore are not able to discriminate between two signals, with wavelengths that are almost the same. These poor characteristics of optical filters cause each demultiplexed signal to be "contaminated" by the other signals, during reception.

It is a well known fact that either diffraction reticles or dielectric multilayer filters deposited on glass can be used as optical filters; henceforth we will refer exclusively to the latter, which consist of a succession of several layers (from 20 to more than 30) of dielectrics with alternating high and low refractive indexes; by proportioning the thickness and number of layers in an opportune manner it is possible to give the filter the desired characteristics.

Are known in the art, for example from GB—A—2.014.752, optical demultiplexer (multiplexer) which comprises a common input (output) optical fiber, a plurality of parallel output (input) single optical fibers, a plurality of optical prisms and a plurality of optical filters.

The invention consists in a demultiplexer (multiplexer) for transmission systems in optical fiber, of the above described type, which includes

—a first optical prism ($P_1$) to which is connected the common optical fiber carrying $n$ signals $\lambda_i$ ($\lambda_1$, $\lambda_2$, ..., $\lambda_n$);

—a second optical prism ($P_2$), identical to the first one, to which are connected $n$ single optical fibers each of which carries one of the $n$ signals $\lambda_i$;

—a third optical prism ($P_3'$), placed between the first and the second optical prism ($P_1$, $P_2$);

—a first group of $(n-1)$ optical filters ($F'_1$, $F'_2$, ..., $F'_{n-1}$) placed between the first and the third optical prism ($P_1$, $P_3$);

—a second group of $(n-1)$ optical filters ($F_1$, $F_2$, ..., $F_{n-1}$) placed between the second and the third optical prism ($P_2$, $P_3$), each optical filter ($F'_i$) of said first group being identical to the corresponding optical filter ($F_i$) of said second group.

To (from) the first $(n-1)$ single optical fibers are sent (come) the light rays that travel through the corresponding optical filters of the second group and through the second optical prism, whilst to (from) the n-th single optical fiber are sent (come) the light rays reflected from the last optical filter of the first group and travelling through the third and the second optical prism.

The invention will be described in greater detail with reference to an example of realization of a demultiplexer, described with the help of the attached figures wherein:

—Figure 1 shows the diagram of a well known type of demultiplexer;

Figures 2 and 3 respectively show diagrams of a demultiplexer, and a multiplexer, realized according to the present invention.

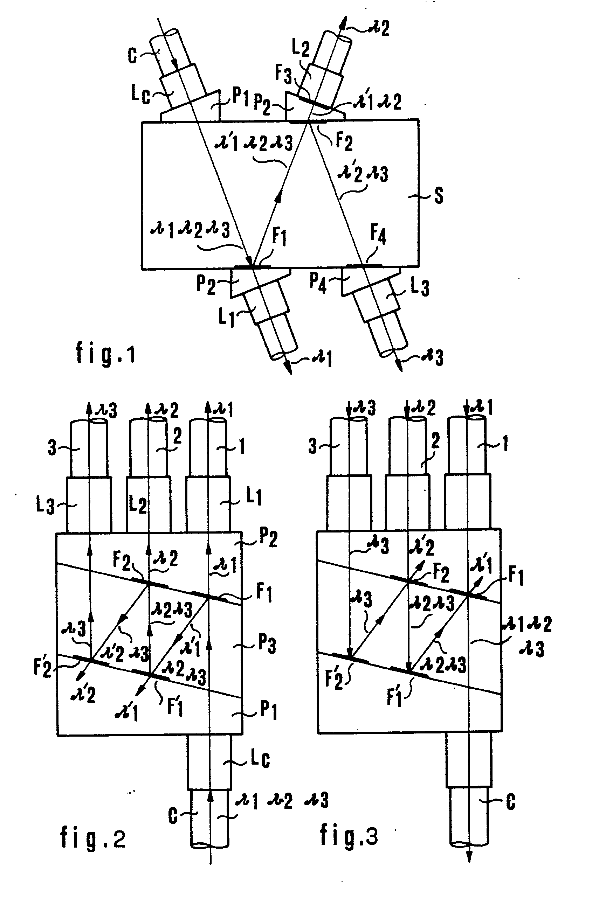

Before examining the diagrams illustrated in Figures 1, 2 and 3, let us recall that in optical fiber systems it is preferred that the signals be characterized by their wavelengths $\lambda$ and that, given two signals $\lambda_1$ and $\lambda_2$, if $\lambda_1$ belongs to the pass-band of a filter F, the filter F will let $\lambda_1$ pass, and, in theory, only reflects $\lambda_2$; in actual fact the filter F also reflects $\lambda_1$, for example, attenuated by 15 dB.

We will refer now to the diagram in Figure 1, wherein the common optical fiber (henceforth referred to as the input one) C carries three signals ($\lambda_1$, $\lambda_2$, $\lambda_3$) to the demultiplexer which includes an element in optical glass S with parallel faces, prisms in optical glass $P_1$, $P_2$, $P_3$ and $P_4$ and some optical filters $F_1$, $F_2$, $F_3$ and $F_4$. In the diagram, only the axis of symmetry of the beam of light rays, made parallel by the dielectric lenses L ($L_C$, $L_1$, $L_2$, $L_3$), have been shown.

At the present state of art, the optical filters whose real characteristics are nearest to the theoretical ones, are band-reject filters: therefore we will presume that in the circuit shown in Figure 1, the filters are all of the band-reject type.

The signals $\lambda_1$, $\lambda_2$, $\lambda_3$, carried by the fiber C, reach a first filter $F_1$ that allows $\lambda_1$ to pass, and reflects $\lambda_2$, $\lambda_3$ and $\lambda_1$ attenuated by 15 dB (in the Figure $\lambda'_1$).

$\lambda_1$ is concentrated by the lens $L_1$ into the first single optical fiber (henceforth referred to as an output one); the signals $\lambda'_1$, $\lambda_2$ and $\lambda_3$ reach the second filter $F_2$ which sets $\lambda'_1$ and $\lambda_2$ pass and reflects $\lambda''_1$ ($\lambda_1$ attenuated, by 30 dB), $\lambda'_2$ ($\lambda_2$ attenuated by 15 dB) and $\lambda_3$.

On the output of the second filter $F_2$, the signal $\lambda_2$ is "contaminated" by a signal $\lambda'_1$ which though attenuated by 15 dB, still has a width such as to interfere in an unacceptable manner with the signal $\lambda_2$; therefore it is necessary to insert a third filter $F_3$, which eliminates $\lambda'_1$, between the filter $F_2$ and the lens $L_2$ of the second output optical fiber. In the same way, a fourth filter $F_4$, placed between $F_2$ and the lens $L_3$ of the third output optical fiber, eliminates $\lambda'_2$ and $\lambda''_1$ which in any case is so weak it can be ignored (it has been omitted in the diagram).

Therefore the demultiplexor of the known type described in Figure 1 requires four filters that are all different from one another, which makes it very expensive.

In fact, the design of a multilayer filter is a long and expensive job, it being necessary to also solve all the problems deriving from the limits that the present deposition techniques present, as far as the possibility of checking the deposition thicknesses and therefore the reproducibility of the filter thus obtained, are concerned; on the other hand, once the productive process has been defined, it is possible to obtain a large number of identical filters at a relatively low cost by depositing the dielectric layers on a support in optical glass of relatively large dimensions and then cutting it, in the same manner as is usually used for producing semiconductor circuits.

The demultiplexer designed according to the invention and illustrated in Figure 2 differs essentially from the known type shown in Figure 1 because it requires only two different types of filters which makes its design and production much less expensive.

This economic advantage becomes ever more evident the higher the number $n$ of signals to be demultiplexed is: in fact the known type of circuit illustrated in Figure 1 requires the designing of 2 $(n-1)$ types of filter that are different from one another.

A further advantage of the circuit made according to the invention is the fact that the multiplexed signals come out parallel to one another and orthogonally to the base of the prism $P_2$, without requiring the interpositioning of further prisms such as for example those indicated in Figure 1 by $P_1$, $P_2$, $P_3$ and $P_4$.

The signals $\lambda_1$, $\lambda_2$, and $\lambda_3$ carried by the input optical fiber C are sent to a first filter $F_1$ which lets $\lambda_1$ pass (this is concentrated by the lens $L_1$ onto the first output optical fiber) and reflects $\lambda'_1$ (in other words $\lambda_1$ attenuated by 15 dB), $\lambda_2$ and $\lambda_3$ onto a second filter $F'_1$, that is identical to $F_1$.

The filter $F'_1$ lets $\lambda'_1$ pass (this can be freely left to go on into the prism $P_1$ or, preferably, dissipated onto absorption means that can be realized, for example, by blacking out the face of the support that is in contact with the prism $P_1$), and reflects onto a second filter $F_2$, the signals $\lambda_2$, $\lambda_3$, and $\lambda''_1$, which, having been attenuated by 30 dB, can be ignored (is has been omitted in the Figure).

$F_2$ lets $\lambda_2$ pass (this is concentrated by the lens $L_2$ onto the second output fiber) and reflects $\lambda'_2$ and $\lambda_3$ onto a second filter $F'_2$ that is identical to $F_2$. $F'_2$ lets $\lambda'_2$ pass (the energy of this can be left to freely exit from the prism $P_1$ or else be absorbed, for example, by blacking out the face of the support that is in contact with the prism $P_1$) and reflects $\lambda_3$ ($\lambda''_2$ or $\lambda_2$ attenuated by 30 dB, can be ignored) which is concentrated by a third lens $L_3$ onto the third output optical fiber.

In Figure 1 and 2 the optical filters have been symbolically represented by means of a thicker line along the separation surface between two prisms: this is only a simplification of the graphic representation of the demultiplexers. In actual fact the filters appear as components of a certain thickness inserted between two prisms: in order to avoid discontinuity in the physical course of the light rays in the transition areas, between two prisms, where there is no filter, it is necessary to insert small plates of optical glass, which will not interfere with the course of the rays themselves, between the prisms.

It is also best to use band-reject filters for the example of realization of the invention illustrated in Figure 2 ($F_1$ and $F'_1$ have to reject $\lambda_2$ and $\lambda_3$, $F_2$ and $F'_2$ have to reject $\lambda_3$); without straying from the ambit of the invention (and by choosing the cutting frequencies accordingly) it is possible to use band pass filters.

Now by referring to Figure 3, we will summarily describe the use of the invention for a multiplexer: the signals $\lambda_1$, $\lambda_2$ and $\lambda_3$ are input to the multiplexer through the corresponding optical fibers and are multiplexed onto the optical fiber C.

$\lambda_3$ is reflected by $F'_2$ and $F_2$; $\lambda_2$ goes from $F_2$ and is output, together with $\lambda_3$, onto $F'_1$ which reflects them onto $F_1$; $\lambda_1$ goes through $F_1$ and is output onto optical fiber C together with $\lambda_2$ and $\lambda_3$, reflected by $F_1$.

Again without straying from the ambit of the invention, it will be possible for a person skilled in the art to carry out all the variations suggested by experience and/or technological progress to the device described herein and illustrated in Figures 2 and 3.

**Claims**

1. A demultiplexer (multiplexer) for transmission systems in optical fiber comprising a common input (output) optical fiber, a plurality of parallel output (input) signal optical fibers, a plurality of optical prisms and a plurality of optical filters, characterized by the fact that includes:

—a first optical prism ($P_1$) to which is connected the common optical fiber carrying $n$ signals $\lambda_i$ ($\lambda_1$, $\lambda_2$, ..., $\lambda_n$);

—a second optical prism ($P_2$), identical to the first one, to which are connected $n$ single optical fibers each of which carries one of the $n$ signals $\lambda_i$;

—a third optical prism ($P_3$), placed between the first and the second optical prism ($P_1$, $P_2$);

—a first group of (n−1) optical filters ($F'_1$, $F'_2$, ..., $F'_{n-1}$) placed between the first and the third optical prism ($P_1$, $P_3$);

—a second group of (n−1) optical filters ($F_1$, $F_2$, ..., $F_{n-1}$) placed between the second and the third optical prism ($P_2$, $P_3$), each optical filter ($F'_i$) of said first group being identical to the corresponding optical filter ($F_i$) of said second group; and

by the fact that to (from) the first (n−1) single optical fibers are sent (come) the light rays that travel through the corresponding optical filter ($F_1$, $F_2$, ..., $F_{n-1}$) of the second group and through said second optical prism ($P_2$), whilst to (from) the n-th single optical fiber are sent (come) the light rays reflected by the last optical filter ($F'_{n-1}$) of the first group and travelling through said third and second optical prism ($P_3$, $P_2$).

2. A demultiplexer as described in claim 1, characterized by the fact that it includes means designed to absorb the energy of the light rays that travel through each optical filter ($F'_1$, $F'_2$, ..., $F'_{n-1}$) of said first group.

3. A demultiplexer as described in claim 2, characterized by the fact that the face of each optical filter ($F'_i$) of said first group that comes into contact with the first optical prism ($P_1$) is blacked out.

**Patentansprueche**

1. Ein Demultiplexer (Multiplexer) fuer Uebertragungssysteme in Optikfasern enthaelt eine Optikfaser mit gemeinsamer Eingabe (Ausgabe), eine Mehrzahl von einzelnen Optikfasern mit paralleler Ausgabe (Eingabe), eine Mehrzahl von Optikprismen und eine Mehrzahl von optischen Filtern und ist von der Tatsache gekennzeichnet, folgendes umzufassen:

—ein erstes optisches Prisma (P1), mit dem die gemeinsame optische Faser verbunden ist, die das n-Signal $\lambda_i$ ($\lambda_1$, $\lambda_2$, ... $\lambda_n$) traegt;

—ein zweites optisches Prisma (P2), identisch mit dem ersten, mit dem n einzelne optische Fasern verbunden sind, jede von deren eines der n-Signals $\lambda i$ traegt;

—ein drittes optisches Prisma (P3), das sich zwischen dem ersten und dem zweiten optischen Prisma (P1, P2) befindet;

—eine erste Gruppe von (n−1) optischen Filtern (F'1, F'2, ... F'n−1), die sich zwischen dem ersten und dem dritten optischen Prisma (P1, P3) befindet

—eine zweite Gruppe von (n−1) optischen Filtern (F1, F2 ... Fn−1), die sich zwischen dem zweiten und dem dritten optischen Prisma (P2, P3) befindet; jedes optische Filter (F'i) von der genannten ersten Gruppe ist mit dem entsprechenden optischen Filter (Fi) der genannten zweiten Gruppe identisch; und

von der Tatsache gekennzeichnet, dass zu (von) den ersten (n−1) einzelnen optischen Fasern die Lichtstrahlen gesandt werden (kommen), die durch das entsprechende optische Filter (F1, F2 ... Fn−1) der zweiten Gruppe und durch das genannte optische Prisma (P2) durchgehen, waehrend zu (von) der n · ten einzelnen optischen Faser die Lichtstrahlen gesandt werden (kommen), die von dem letzten optischen Filter (F'n−1) der ersten Gruppe reflektiert werden und durch die genannten dritten und zweiten optischen Prismen (P3, P2) gehen.

2. Ein Demultiplexer, wie unter dem Anspruch 1, beschrieben von der Tatsache gekennzeichnet, dass es Mittel aufweist, die die Energie der Lichtstrahlen absorbieren, welche durch jedes optische Filter (F'1, F'2... F'n−1) der genannten ersten Gruppe durchgehen.

3. Ein Demultiplexer, wie unter dem Anspruch 2 beschrieben von der Tatsache gekennzeichnet, dass die Seite von jedem optischen Filter (F'i) der genannten ersten Gruppe, das in Beruehrung mit dem ersten optischen Prisma (P1) kommt, geschwaerzt wird.

**Revendications**

1. Démultiplexeur (Multiplexeur) pour systèmes de transmission en fibre optique comprenant une fibre optique commune d'entrée (sortie), une pluralité de fibres optiques individuelles parallèles de sortie (entrée), une pluralité de prismes optiques et une pluralité de filtres optiques, caractérisé par le fait d'incorporer:

—un premier prisme optique ($P_1$) auquel est connectée la fibre optique commune portant $n$ signaux $\lambda_i$ ($\lambda_1$, $\lambda_2$, ..., $\lambda_n$);

—un deuxième prisme optique ($P_2$), identique au premier, auquel sont connectées $n$ fibres optiques individuelles, chacune d'elles portant un des $n$ signaux $\lambda_i$;

—un troisième prisme optique ($P_3$), situé entre le premier et le deuxième prisme optique ($P_1$, $P_2$);

—un premier groupe de (n−1) filtres optiques ($F'_1$, $F'_2$, ..., $F'_{n-1}$), situé entre le premier et le troisième prisme optique ($P_1$, $P_3$);

—un deuxième groupe de (n−1) filtres optiques ($F_1$, $F_2$, ..., $F_{n-1}$), situé entre le deuxième et le troisième prisme optique ($P_2$, $P_3$); chaque filtre optique ($F'_i$) dudit premier groupe est identique au correspondant filtre optique ($F_i$) du deuxième groupe; et

par le fait qu'aux (des) (n−1) premières fibres optiques individuelles sont envoyés (proviennent) les rayons lumineux traversant le correspondant filtre optique ($F_1$, $F_2$, ..., $F_{n-1}$) du deuxième groupe, ainsi que ledit deuxième prisme optique ($P_2$), pendant qu'à (de) la n-éme fibre optique individuelle sont envoyés (proviennent) les rayons lumineux réfléchis par le dernier filtre optique ($F'_{n-1}$) du premier groupe et traversant le troisième et deuxième prisme optique ($P_3$, $P_2$) susdits.

2. Démultiplexeur, comme il est décrit à la revendication 1, caracatérisé par le fait qu'il incorpore des moyens conçus pour absorber l'énergie des rayons lumineux traversant chacun des filtres optiques ($F'_1$, $F'_2$, ..., $F'_{n-1}$) dudit premier groupe.

3. Démultiplexeur, comme il est décrit à la revendication 2, caractérisé par le fait que la face de chaque filtre optique ($F'_i$) dudit premier groupe entrant en contact avec le premier prisme optique ($P_1$) est moircie.

EP 0 164 170 B1

fig.1

fig.2

fig.3